# FASCICULE DE BREVET EUROPEEN

(11) **EP 3 556 535 B1**
(45) Date de publication et mention de la délivrance du brevet: **17.02.2021**
(21) Numéro de dépôt: 19168247.5
(22) Date de dépôt: 09.04.2019
(51) Int. Cl.: B29C 49/48, B29C 49/06, B29C 49/36, B29K 67/00, B29L 31/00

(54) **UNITE DE MOULAGE AVEC ORIFICE DE PASSAGE DE COL DECENTRE**
SPRITZGUSSEINHEIT MIT DURCHLASSÖFFNUNG EINES DEZENTRIERTEN STUTZENS
MOULDING UNIT WITH OPENING FOR MOVEMENT OF OFF-CENTRE NECK

(30) Priorité: 16.04.2018 FR 1853297
(43) Date de publication de la demande: 23.10.2019
(73) Titulaire: Sidel Participations, 76930 Octeville-sur-Mer (FR)
(72) Inventeur: HELLOUIN, Damien, 76930 Octeville-sur-mer (FR); TOUTOUX, Alexandre, 76930 Octeville-sur-mer (FR)
(74) Mandataire: Sidel Group

(56) Documents cités:
- FR-A1- 3 066 136
- JP-A- S5 759 725
- US-A1- 2007 145 646
- US-A1- 2009 028 976

## Description

### DOMAINE TECHNIQUE DE L'INVENTION

L'invention concerne une unité de moulage pour le formage de récipients en matériau thermoplastique à partir de préformes, notamment par soufflage ou étirage-soufflage, l'unité de moulage comportant :
- deux supports de moule articulés autour d'un axe vertical de charnière entre une position ouverte et une position fermée ;
- un moule comportant au moins deux demi-moules dont chacun destiné à être monté sur l'un des supports de moule associé, chaque demi-moule étant délimité par une face de joint avant et par une face d'assemblage arrière, les deux demi-moules étant susceptibles d'occuper une position jointe par leur face de joint lorsque les supports de moule occupent leur position fermée ;
- une cavité de moulage qui est réalisée en deux partie dans chaque face de joint et qui est reconstituée lorsque le moule occupe sa position jointe, la cavité débouchant verticalement vers le haut par un orifice de passage destiné à laisser passer un col de la préforme.

### ARRIERE PLAN TECHNIQUE DE L'INVENTION

Il est connu de fabriquer en grandes séries des récipients, notamment des bouteilles, en matières thermoplastiques par soufflage ou étirage-soufflage de préformes. A cet effet, les préformes chaudes sont insérées dans des unités de moulage présentant une cavité de moulage de la forme du récipient à obtenir. Les documents US2009/028976A1, US2007/145646A1 et FR3066136A1 décrivent des unités de moulage représentatifs de l'art antérieur.

Pour permettre de réaliser les récipients en grandes séries, plusieurs unités de moulage sont agencées sur une roue principale formant un carrousel rotatif d'une installation de formage. Ceci permet de former successivement plusieurs récipients pendant leur déplacement entre un point d'entrée et un point de sortie.

En phase de fabrication, les préformes sont amenées à une unité de moulage de l'installation de formage à laquelle est associé un dispositif de formage par application d'au moins un fluide de formage sous pression, gazeux et/ou liquide, dans la préforme. Le formage de la préforme est par exemple obtenu par soufflage ou étirage-soufflage au moyen d'un gaz sous pressions, tel que de l'air.

Dans une installation de formage à carrousel rotatif, chaque unité de moulage comporte au moins un moule équipé d'une cavité de moulage. Le moule est réalisé en au moins deux demi-moules portant chacun une empreinte de la moitié de la cavité de moulage. Les demi-moules sont portés par deux supports de moule associés. Les supports de moule sont mobiles entre une position ouverte, dans laquelle les deux demi-moules sont écartés pour permettre l'extraction d'un récipient moulé et l'introduction d'une préforme, et une position fermée dans laquelle les deux demi-moules occupent une position jointe pour reconstituer la cavité de moulage pendant l'opération de formage.

Les deux supports de moule sont montés pivotants l'un par rapport à l'autre, articulés par une charnière verticale. Une telle unité de moulage est aussi connue sous l'appellation "moule portefeuille".

En variante, les supports de moule sont montés coulissant l'un par rapport à l'autre.

Les récipients obtenus par un tel procédé sont notamment des bouteilles. Une telle bouteille comporte un corps délimitant un volume destiné à recevoir un produit, par exemple un liquide ou une poudre. Le corps comporte généralement un fond plat qui permet de poser la bouteille debout. La bouteille est généralement ouverte vers le haut par un col qui est susceptible d'être bouché. Le col permet à l'utilisateur de verser le produit contenu dans la bouteille. Pour la suite de la description, on définit l'axe principal du récipient comme étant l'axe vertical passant par le centre du col.

Dans de nombreux domaine, il est connu de réaliser une bouteille avec le col centré par rapport à la section horizontale du corps de la bouteille. Par la suite, un tel récipient sera appelé "récipient à col centré". C'est notamment le cas des bouteilles d'eau. Dans ce cas, l'axe principal du récipient passe par le centre des sections horizontales du récipient.

Les fabricants de récipients sont souvent amenés à changer le modèle de récipients produits. C'est notamment le cas des fabricants qui produisent des récipients ou bouteilles destinés à contenir des produits d'entretien ou d'hygiène, dits "home personal care". Pour permettre ce changement de modèle, il est connu de concevoir des unités de moulage permettant de remplacer facilement et rapidement les éléments de moule comportant la cavité.

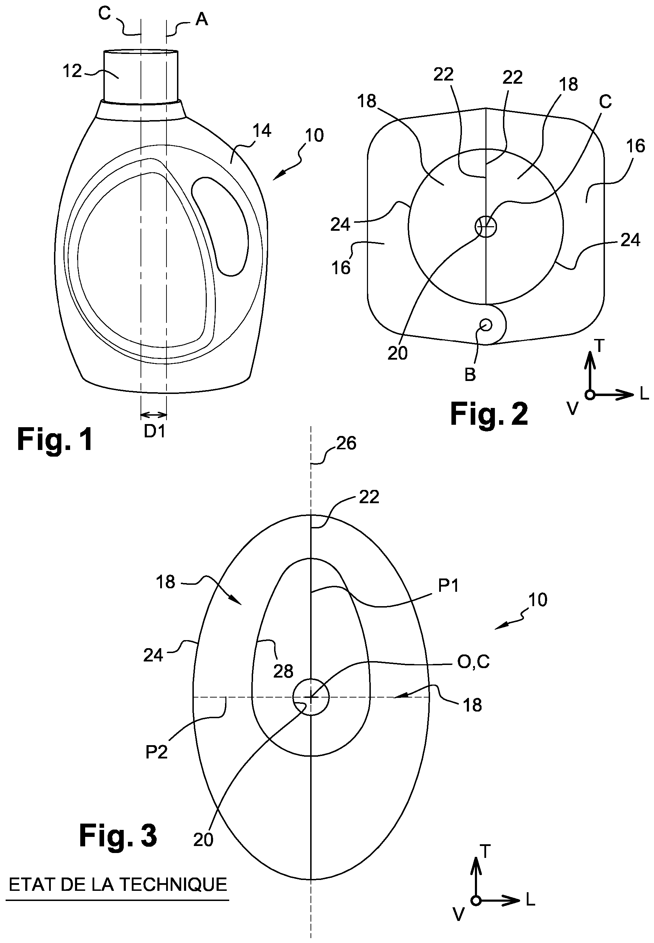

Comme cela est représenté à la figure 1, il est fréquent que des récipients 10 du domaine du "home personal care" présentent une section horizontale de forme oblongue.

En outre, certains récipients de grande dimension présentent une contenance très grande, par exemple de l'ordre de plusieurs litres. C'est par exemple le cas de certaines bouteilles destinées à contenir de la lessive.

Par ailleurs, dans ce type de récipient du domaine "home personal care", il est très fréquent qu'un col 12 du récipient soit excentré par rapport au centre de la section horizontale du récipient 10. Par la suite, un tel récipient sera appelé "récipient à col excentré". On a représenté à la figure 1 l'axe "C" principal du récipient qui passe par le centre du col 12. On a aussi représenté un axe "A" passant globalement par le centre de chaque section horizontale du récipient. Comme cela est visible à la figure 1, l'excentration du col 12 se traduit par un décalage "D1" transversal de l'axe "C" principal du récipient par rapport à l'axe "A", dans le sens de la longueur de la section oblongue du récipient.

Ceci permet notamment de réserver une place dans la paroi du récipient pour réaliser une poignée 14 du côté opposé à celui du col 12. En outre, l'excentration du col 12 par rapport à la poignée 14 permet de faciliter l'utilisation du récipient pour l'utilisateur final en déplaçant le centre de gravité du récipient vers le col 12 lorsque le récipient est incliné pour permettre de verser son contenu.

Les unités de moulage sont donc prévues pour permettre la production de récipients oblongs de grande dimension.

De manière traditionnelle, les unités de moulage sont réalisées sur le modèle des unités de moulage utilisées pour produire des récipients à col centré, comme cela est par exemple représenté à la figure 2. En général, l'unité de moulage comporte deux supports 16 de moule qui sont montés articulés l'un par rapport à l'autre le long d'un axe "B" de charnière vertical. Un demi-moule 18 est reçu dans chaque support 16. Les demi-moules 18 comportent chacun une demi-cavité qui est reconstituée lorsque les deux demi-moules 18 sont joints, en position fermée des supports 16 de moule. La cavité débouche vers le haut par un orifice 20 de passage qui est destiné à laisser passer le col 12 du récipient.

Les deux demi-moules 18 étant identiques par symétrie par rapport à un plan de joint, on ne décrira que le demi-moule 18 de gauche, la description étant applicable au demi-moule 18 de droite par symétrie.

Ainsi, le demi-moule 18 est délimité longitudinalement vers l'avant par une face 22 de joint avant plane transversale verticale qui est munie d'une moitié de cavité de moulage (non représentée). Dans une position jointe, les deux demi-moules 18 sont destinés à être joints en plaquant leurs faces 22 de joint respectives longitudinalement l'une contre l'autre pour reconstituer la cavité de moulage, comme représenté à la figure 2.

Le demi-moule 18 est aussi délimité longitudinalement vers l'arrière par une face 24 d'assemblage verticale opposée. La face 24 d'assemblage présente, en coupe horizontale, une forme courbée de manière convexe. La face 24 d'assemblage est destinée à être logée dans une face de réception complémentaire d'un support 16 de moule associé. La face 24 d'assemblage présente généralement une forme hémicylindrique. Ainsi, lorsque les deux demi-moules 18 occupent leur position jointe, leurs faces 24 d'assemblage présentent, en coupe horizontale, une forme circulaire.

L'orifice 20 de passage est toujours agencé à cheval sur le plan de joint entre les deux demi-moules 18. Il est d'usage courant que l'orifice 20 de passage du col soit centré par rapport à la section circulaire des faces 24 d'assemblage des demi-moules.

Cependant, un tel mode de réalisation, dans lequel le moule présente une face d'assemblage cylindrique de révolution, peut devenir très encombrant lorsqu'il s'agit de réaliser des récipients du domaine "home personal care" présentant une section oblongue, un volume important et un col excentré.

Pour que le carrousel puisse porter un nombre assez élevé d'unités de moulage, par exemple une dizaine, tout en demeurant assez compact, il est connu de réaliser des unités de moulage comportant des moules dits "elliptiques". Ces moules elliptiques présentent, en coupe horizontale, un contour de forme oblongue.

On a représenté à la figure 3 un tel moule elliptique réalisé selon l'état de la technique.

Le moule présente deux demi-moules 18 monoblocs qui sont chacun porté par un support de moule associé (non représenté). Les deux demi-moules 18 étant identiques par symétrie par rapport à un plan 26 de joint, on ne décrira que le demi-moule 18 de gauche, la description étant applicable au demi-moule 18 de droite par symétrie.

Ainsi, le demi-moule 18 est délimité longitudinalement vers l'avant par une face 22 de joint avant plane transversale verticale qui est munie d'une moitié de la cavité 28 de moulage. La face 22 de joint s'étend dans le plan 26 de joint. Dans une position jointe, les deux demi-moules 18 sont destinés à être joints en plaquant leurs faces 22 de joint respectives longitudinalement l'une contre l'autre pour reconstituer la cavité 28 de moulage.

Le demi-moule 18 est aussi délimité longitudinalement vers l'arrière par une face 24 d'assemblage verticale opposée. La face 24 d'assemblage présente, en coupe horizontale, une forme courbée de manière convexe. La face 24 d'assemblage est destinée à être logée dans une face de réception complémentaire d'un support de moule associé (non représenté). La face 24 d'assemblage présente généralement une forme cylindrique formée par la translation d'une droite génératrice verticale sur la courbe directrice, formée par la forme courbée de la face 24 d'assemblage en coupe horizontale représentée à la figure 3.

De manière connue, la face 24 d'assemblage présente, en coupe horizontale, la forme d'un demi-ovale. En position jointe, les faces 24 d'assemblage des deux demi-moules 18 forment donc un ovale complet.

La face 24 d'assemblage du moule en position jointe présente un premier plan "P1" qui s'étend dans le plan 26 de joint. Dans l'exemple représenté aux figures, le premier plan "P1" forme un plan de symétrie pour les faces 24 d'assemblage.

De même, la face 24 d'assemblage du moule en position jointe présente en outre un deuxième plan "P2" vertical de symétrie qui s'étend orthogonalement au premier plan "P1" de symétrie. Les deux plans "P1" et "P2" de symétrie de coupe en un axe vertical "O" central. Comme on peut le constater, l'axe "C" de l'orifice 20 de passage coïncide ici avec l'axe "O" central du moule 18.

Ceci est toujours le cas, même lorsque l'axe "C" principal du récipient à obtenir est décalé par rapport à la section du récipient, comme cela est par exemple illustré à la figure 3. Dans ce cas, la cavité 28 s'étend davantage d'un côté du moule 18 que de l'autre, ici transversalement vers le haut de la figure 3.

Un tel moule réalisé selon l'état de la technique permet avantageusement de réaliser des récipients oblongs de grande dimension en diminuant l'encombrement longitudinal des moules par rapport à des moules présentant, en section, un contour circulaire, tel qu'illustrés à la figure 2.

Cependant, l'orifice 20 de passage étant centré par rapport au moule 18 mais excentré par rapport à la section du récipient à obtenir, une partie du volume du moule 18, comme représenté en bas de la figure 3, demeure inutilisée pour la réalisation du récipient.

En outre, il n'est pas possible de modifier la position de l'orifice 20 de passage du col car la position de dernier est déterminée par la position du dispositif de formage qui est associé à l'unité de moulage. Or, un tel dispositif de formage est encombrant et est généralement monté à une position fixe sur la roue principale de l'installation de moulage.

### BREF RESUME DE L'INVENTION

L'invention propose une unité de moulage pour le formage de récipients en matériau thermoplastique à partir de préformes, notamment par soufflage ou étirage-soufflage, l'unité de moulage comportant :
- deux supports de moule mobiles entre une position ouverte et une position fermée ;
- un moule comportant au moins deux demi-moules dont chacun destiné à être monté sur l'un des supports de moule associé, chaque demi-moule étant délimité par une face de joint avant et par une face d'assemblage arrière, les deux demi-moules étant susceptibles d'occuper une position jointe par leur face de joint lorsque les supports de moule occupent leur position fermée ;

- une cavité de moulage qui est réalisée en deux partie dans chaque face de joint et qui est reconstituée lorsque le moule occupe sa position jointe, la cavité débouchant verticalement vers le haut par un orifice de passage destiné à laisser passer un col de la préforme ;
en position jointe, les faces d'assemblage du moule présentent :
- un premier plan vertical transversal qui s'étend le long des faces de joints et qui passe par le centre de l'orifice de passage, et
- un deuxième plan de symétrie vertical orthogonal au premier plan de symétrie, les deux plans de symétrie se croisant à un axe vertical central du moule ;
caractérisé en ce que l'axe central de l'orifice de passage est décalé transversalement par rapport à l'axe central du moule.

Selon d'autres caractéristiques de l'unité de moulage réalisée selon les enseignements de l'invention :
- le premier plan passe par un axe de charnière entre les deux supports de moule, l'orifice de passage étant décalé dans une direction opposée à celle de l'axe de charnière de manière que l'axe central du moule est interposé entre l'axe central de l'orifice de passage et l'axe de charnière ;
- en position jointe du moule, les faces d'assemblage présentent une section horizontale elliptique ;
- en position jointe du moule, la face d'assemblage de chaque demi-moule présente une section horizontale en forme d'arc de cercle qui s'étend sur un secteur inférieur à 180° ;
- chaque demi-moule est réalisé en une seule pièce ;
- chaque demi-moule est réalisé en deux parties :
   -- une coquille interne qui est délimitée longitudinalement par une face avant formant la face de joint du demi-moule et par une face arrière, opposée à la face de joint, et formant une face de montage de forme convexe ;
   -- un porte-coquille externe qui est délimité longitudinalement par une face de réception avant de forme complémentaire à celle de la face de montage de la coquille et dans laquelle la face de montage de la coquille est logée et par une face arrière opposée qui forme la face d'assemblage du demi-moule ;
- en coupe horizontale, la face de montage de la coquille présente une forme d'arc de cercle ;
- chaque face de montage présentant, en coupe horizontale, une forme de demi-cercle centré sur l'axe central de l'orifice de passage ;
- la face de montage est concentrique à la face d'assemblage du demi-moule associé ;
- l'unité de moulage comporte deux pistons de boxage qui sont chacun montés coulissants dans un demi-moule associé entre une position rétractée par rapport à la cavité de moulage et une position étendue dans la cavité de moulage, les pistons de boxage étant agencés dans l'épaisseur de chaque demi-moule à proximité de l'axe de charnière.

L'invention concerne aussi une installation de formage comportant :
- une roue principale rotative ;
- une pluralité d'unités de moulage réalisées selon enseignements de l'invention, les unités de moulage étant réparties régulièrement à la périphérie de la roue principale ;
- des dispositifs de formage comportant un embout de raccordement avec l'orifice de passage qui est centré sur l'axe de l'orifice de passage.

### BREVE DESCRIPTION DES FIGURES

D'autres caractéristiques et avantages de l'invention apparaitront au cours de la lecture de la description détaillée qui va suivre pour la compréhension de laquelle on se reportera aux dessins annexés dans lesquels :
- la figure 1 est une vue de côté qui représente un récipient à section oblongue et à col excentré ;
- la figure 2 est une vue de dessus qui représente une unité de moulage réalisé selon un premier état de la technique connu ;
- la figure 3 est une vue de dessus qui représente un moule réalisé selon un deuxième état de la technique connu ;
- la figure 4 est une vue de dessus qui représente une unité de moulage réalisée selon un premier mode de réalisation de l'invention, les supports de moule occupant une position fermée et les demi-moules une position jointe ;
- la figure 5 est une vue similaire à celle de la figure 4 qui représente les supports de moule en position ouverte et les demi-moules en position écartée ;
- la figure 6 est une vue en perspective qui représente l'un des demi-moules qui équipe l'unité de moulage de la figure 4 ;
- la figure 7 est une vue de dessus qui représente schématiquement une installation de formage comportant une roue principale tournante équipée d'une pluralité d'unités de moulage réalisées selon le premier mode de réalisation de l'invention ;
- la figure 8 est une vue en coupe transversale verticale selon le plan de coupe 8-8 de la figure 7 qui représente une unité de moulage montée sur la roue principale de l'installation de formage et équipée d'un dispositif de formage ;
- la figure 9 est une vue de dessus qui représente schématiquement une unité de formage réalisée selon un deuxième mode de réalisation de l'invention ;
- la figure 10 est une vue similaire à celle de la figure 9 qui représente l'unité de formage réalisée selon le deuxième mode de réalisation de l'invention dans une autre configuration.

### DESCRIPTION DETAILLEE DES FIGURES

Dans la suite de la description, des éléments présentant une structure identique ou des fonctions analogues seront désignés par des mêmes références.

Dans la description et dans les revendications, on adoptera à titre non limitatif un repère orthogonal associé à chaque demi-moule et présentant des orientations :
- longitudinale "L" dirigée d'arrière en avant en direction de l'autre demi-moule en position jointe ;
- transversale "T" dirigée de gauche à droite ;
- verticale "V" dirigée de bas en haut, la direction verticale étant indépendante de la direction de la gravité.

Par la suite, on désignera un plan transversal longitudinal comme étant un plan "horizontal".

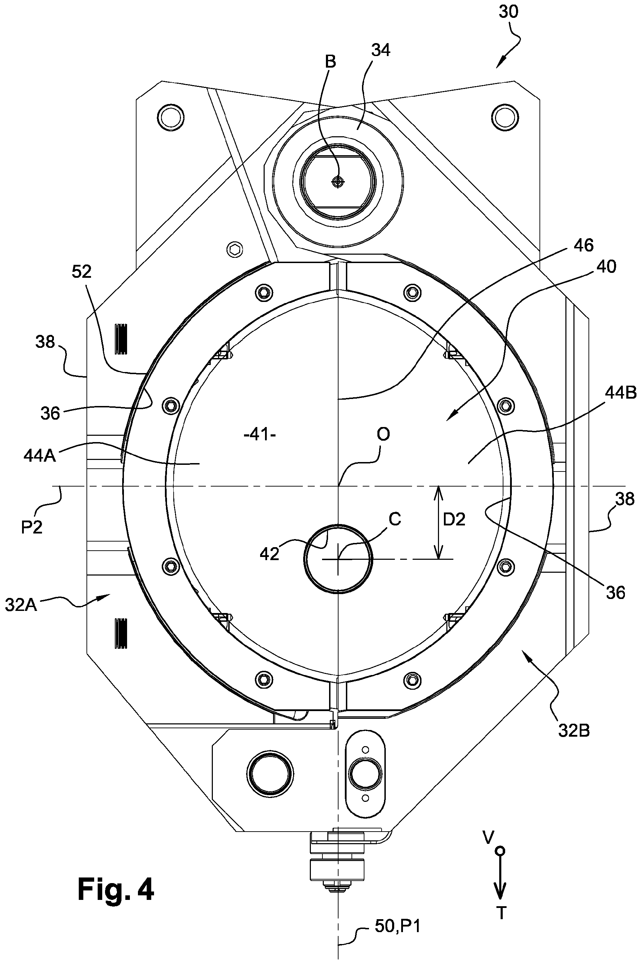

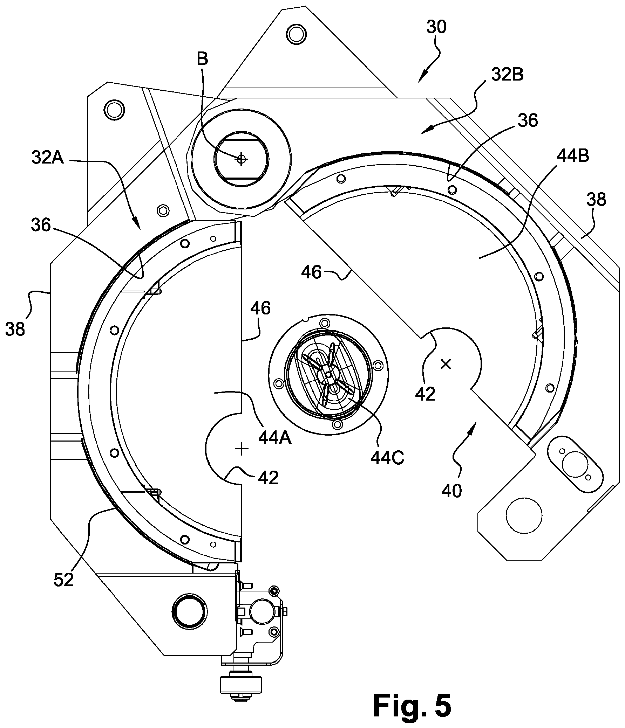

On a représenté aux figures 4 et 5 une unité 30 de moulage pour la fabrication de récipients en matériau thermoplastique, notamment en polyéthylène téréphtalate (PET) ou en polypropylène (PP), d'axe d'orientation verticale par soufflage d'une préforme (non représentée).

L'unité 30 de moulage comporte deux supports 32A, 32B de moule qui sont montés mobiles entre une position fermée, représentée à la figure 4, et une position ouverte, représentée à la figure 5. Dans l'exemple illustré aux figures, les deux supports 32A, 32B de moule sont montés pivotant l'un par rapport à l'autre autour d'un axe "B" vertical de charnière 34 agencé le long d'un bord d'extrémité transversale des supports 32A, 32B de moule. Un tel agencement est généralement appelé "moule portefeuille".

Quoique l'invention soit particulièrement avantageuse avec un moule portefeuille, elle est aussi applicable à des supports de moule mobiles en translation l'un par rapport à l'autre.

Chaque support 32A, 32B de moule est délimité longitudinalement par une face 36 de réception avant verticale et par une face 38 arrière verticale. La face 36 de réception de chaque support 32A, 32B de moule est tournée vers l'autre support 32A, 32B de moule lorsqu'ils occupent leur position fermée.

L'unité 30 de moulage comporte aussi un moule 40 qui présente une cavité 48 de moulage présentant la forme du récipient à obtenir par soufflage. La cavité 48 est débouchante verticalement vers le haut dans une face 41 supérieure horizontale plane du moule 40 par un orifice 42 de passage destiné à laisser passer le col 12 du récipient à obtenir. L'orifice 42 de passage présente un axe "C" vertical central.

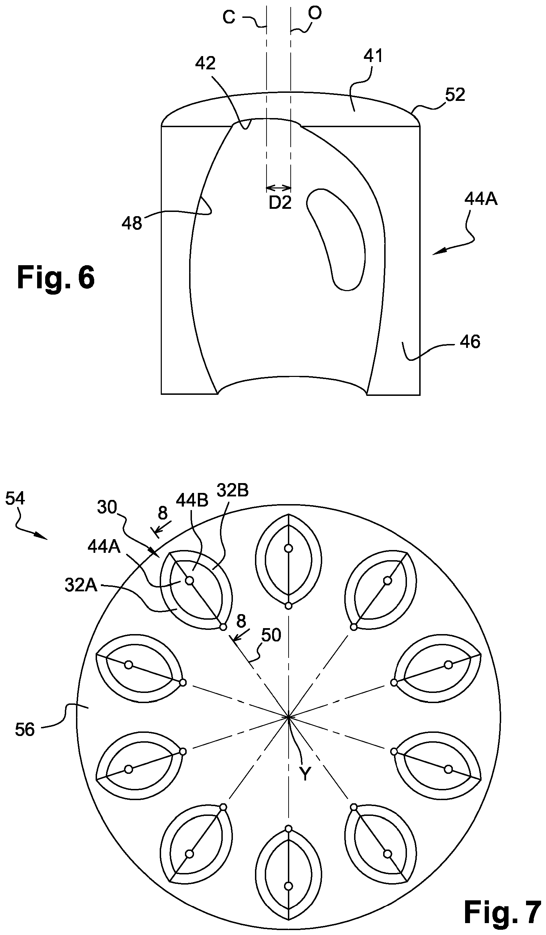

Le moule 40 comporte au moins une paire de demi-moules 44A, 44B complémentaires. Comme cela est particulièrement visible à la figure 6, chaque demi-moule 44A, 44B présente une face 46 de joint avant verticale transversale dans laquelle est formée une moitié de la cavité 48 de moulage. Lorsque les deux demi-moules 44A, 44B occupent une position jointe, comme illustré à la figure 4, les deux demi-moules 44A, 44B sont plaqués l'un contre l'autre par leur face 46 de joint respective pour que leurs moitiés de cavité reconstituent la cavité 48 de moulage. Les faces 46 de joint s'étendent alors dans un plan 50 de joint vertical transversal.

L'orifice 42 de passage est agencé à cheval sur le plan 50 de joint, plus particulièrement de manière que l'axe "C" central de l'orifice 42 de passage soit inclus dans le plan 50 de joint.

Dans le mode de réalisation représenté à la figure 5, le moule 40 comporte en plus un fond 44C distinct des demi-moules 44A, 44B. Ainsi, chaque demi-moule 44A, 44B est propre à former le corps du récipient, tandis que le fond 44C est propre à former le fond du récipient.

En variante non représentée, le moule comporte uniquement deux demi-moule. L'empreinte de chaque demi-moule est alors propre à former le corps et le fond du récipient.

En se reportant à nouveau à la figure 4, chaque demi-moule 44A, 44B présente aussi une face 52 d'assemblage arrière verticale opposée à la face 46 de joint. La face 52 d'assemblage présente ici une forme d'un secteur de cylindre inférieur à 180° de manière que les faces 52 d'assemblage des deux demi-moules 44A, 44B joints présente, en coupe horizontale, une forme oblongue, ici en forme d'amande, allongée dans une direction transversale. En d'autres termes, la face 52 d'assemblage de chaque demi-moule présente une forme d'arc de cercle centrée sur un axe de référence vertical (non représenté) décalé longitudinalement vers l'autre demi-moule 44B, 44A.

En variante, les faces d'assemblage des deux demi-moules présentent, en coupe horizontale, une forme elliptique ou une forme ovale, allongée dans une direction transversale.

Chaque demi-moule 44A, 44B est monté dans un support 32A, 32B de moule associé en positionnant sa face 52 d'assemblage contre la face 36 de réception associée du support 32A, 32B de moule comme représenté à la figure 4. A cet effet, la face 36 de réception présente une forme complémentaire de celle de la face 52 d'assemblage du demi-moule 44A, 44B associé. Chaque demi-moule 44A, 44B est assemblé avec son support 32A, 32B de moule associé par tout moyen d'assemblage déjà connu dans le domaine des unités de moulage avec cavité 48 de moulage interchangeable.

Les deux demi-moules 44A, 44B sont susceptibles d'occuper leur position jointe par leur face 46 de joint lorsque les supports 32A, 32B occupent leur position fermée, comme représentée à la figure 4, et une position disjointe dans laquelle les faces 46 de joint sont écartées lorsque les supports 32A, 32B occupent leur position ouverte, comme représentée à la figure 5.

En position jointe, représentée à la figure 4, les faces 52 d'assemblage des deux demi-moules 44A, 44B présentent un premier plan "P1" qui s'étend le long des faces 46 de joints. Le premier plan "P1" correspond ainsi au plan 50 de joint. Le premier plan "P1" passe par le centre "C" de l'orifice 42 de passage. Le premier plan "P1" passe ici en outre par l'axe "B" de charnière. Le premier plan "P1" de symétrie correspond ici à un plan de symétrie vertical transversal.

En outre, toujours en position jointe, les faces 52 d'assemblage des deux demi-moules 44A, 44B présentent un deuxième plan "P2" de symétrie vertical orthogonal au premier plan "P1" de symétrie. Les deux plans "P1" et "P2" de symétrie se croisent en un axe "O" vertical central du moule 40.

On remarquera que l'axe "O" central du moule 40 ne coïncide pas nécessairement avec l'axe "A" central du récipient à former.

Cependant, lorsque l'axe "O" central du moule 40 coïncide avec l'axe "A" central du récipient à former, cela permet avantageusement de mieux répartir la matière du moule 40 par rapport aux supports 32A, 32B de moule.

On a représenté à la figure 7 une installation 54 de formage de récipient thermoplastique par formage, et notamment par soufflage ou étirage soufflage, comportant une roue 56 principale horizontale montée tournante autour d'un axe "Y" de rotation central vertical. La roue 56 principale comporte, à sa périphérie, une pluralité d'unités 30 de moulage, ici au nombre de dix, chacune réalisée comme cela a été décrit précédemment. Chaque unité 30 de moulage est agencée de façon à ce que le plan 50 de joint de ses demi-moules 44A, 44B, en position fermée des supports 32A, 32B de moule, passe par l'axe "Y" de rotation de la roue 56 principale. La charnière 34 est tournée vers l'axe "Y" de rotation de manière que les moules 44A, 44B s'ouvrent radialement vers l'extérieur de la roue 56 principale.

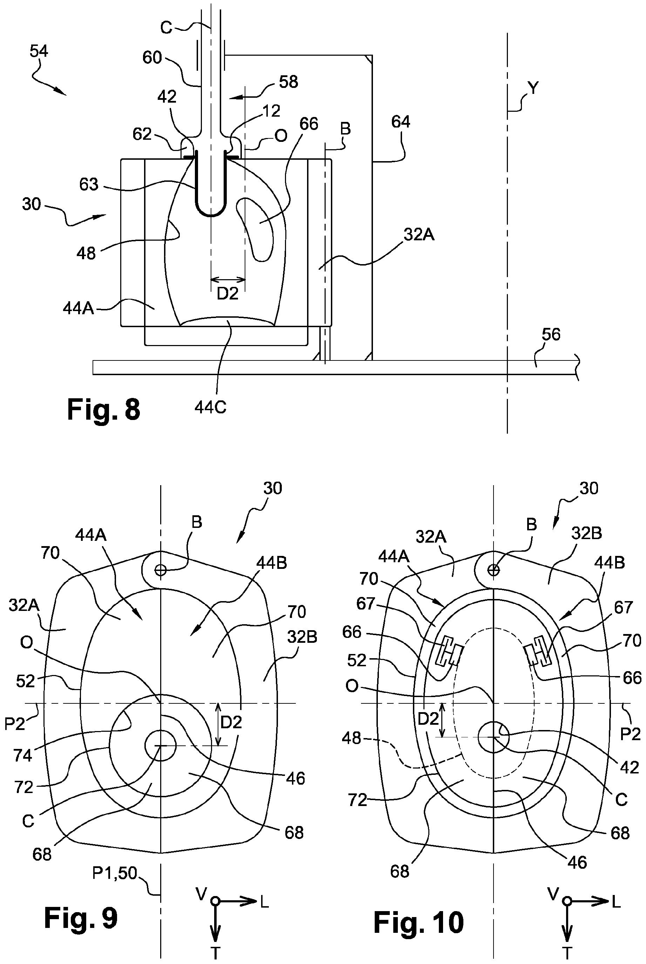

Comme cela est représenté à la figure 8, chaque unité 30 de moulage est portée par la roue 56 principale de manière que son axe "B" de charnière soit fixe par rapport à ladite roue 56 principale.

Par ailleurs, chaque unité 30 de moulage est associée à un dispositif 58 de soufflage qui est porté par la roue 56 principale. Le dispositif 58 de soufflage comporte une conduite 60 de soufflage qui est raccordée à une source commandée de fluide de formage sous pression (non représentée) et qui débouche dans un embout de raccordement avec l'orifice 42 de passage qui est centré sur l'axe "C" de l'orifice 42 de passage. L'embout de raccordement est ici une cloche 62 inférieure qui est centrée sur l'axe "C" de l'orifice 42 de passage du moule 40 de l'unité 30 de moulage associée lorsque le moule 40 occupe sa position jointe. La cloche 62 est montée coulissante verticalement le long de l'axe "C" sur un support 64 monté sur la roue 56 principale entre une position inférieure active dans laquelle des bords inférieurs de la cloche 62 sont plaqués contre la face 41 supérieure du moule 40 en position jointe pour entourer l'orifice 42 de passage, et une position supérieure rétractée dans laquelle la cloche 62 est écartée de la face 41 supérieure pour permettre l'ouverture et la fermeture des supports 32A, 32B de moule.

La position active de la cloche 62 est par exemple représentée à la figure 8. L'axe "C" de coulissement de la cloche 62 est fixe par rapport à la roue 56 principale. Dans sa position active la cloche 62 est susceptible de remplir une préforme 63 chaude de fluide de formage sous pression par son col 12 pour en plaquer les parois contre la cavité 48 pour former le corps du récipient.

Selon les enseignements de l'invention, l'axe "C" central de l'orifice 42 de passage est décalé transversalement d'une distance "D2" par rapport à l'axe "O" central du moule 40.Plus particulièrement, l'orifice 42 de passage est décalé d'une distance "D" dans une direction opposée à celle de l'axe "B" de charnière de manière que l'axe "O" central du moule soit interposé entre l'axe "C" central de l'orifice 42 de passage et l'axe "B" de charnière.

Le décalage de l'axe "C" de l'orifice 42 de passage en direction du bord périphérique de la roue 56 principale permet avantageusement de mieux utiliser le volume compris entre les supports 32A, 32B de moule lors de la fabrication de récipients à section oblongue. Cela permet notamment de diminuer l'encombrement, notamment transversal, des supports 32A, 32B de moule par rapport à une unité de moulage de l'état de la technique dans lequel l'orifice de passage est centré par rapport au moule.

Par ailleurs, pour former la poignée 14 du récipient, le moule 40 est avantageusement équipé de deux pistons 66 de boxage qui sont chacun montés coulissants dans une chambre 67 de travail réalisé dans un demi-moule 44A, 44B associé entre une position rétractée par rapport à la cavité 48 de moulage et une position étendue dans la cavité 48 de moulage. Les pistons 66 de boxage sont par exemple actionnés au moyen de la source commandée de fluide de formage sous pression. Les pistons 66 de boxage sont agencés dans l'épaisseur de chaque demi-moule 44A, 44B à proximité de l'axe "B" de charnière. Les pistons 66 de boxage sont plus particulièrement visibles dans l'exemple représenté à la figure 10 dans laquelle la cavité 48 de moulage a été représentée en traits interrompus.

Les pistons 66 de boxage sont plus particulièrement montés globalement en vis-à-vis l'un de l'autre, selon une direction de coulissement sensiblement longitudinale. Ainsi, lors du formage du récipient, lorsque le récipient a subi une opération de soufflage qui a plaqué sa paroi contre la cavité 48 et que la cloche 62 occupe sa position active, la pression du fluide de formage sous pression est maintenue à l'intérieur du récipient. Les pistons 66 de boxage sont alors commandés depuis leur position rétractée vers leur position étendue pour enfoncer la paroi du récipient à l'encontre de la pression du fluide de formage pour former la poignée 14. Les pistons 66 de boxage sont maintenus étendus jusqu'à ce que la paroi du corps du récipient ait acquis sa forme définitive.

Le décalage de l'orifice 42 de passage du col 12 vers le bord périphérique de la roue 56 principale permet avantageusement de décaler une partie de la cavité 48 transversalement vers le bord périphérique de la roue 56 principale par rapport à un moule à orifice de passage centré. Ceci permet très avantageusement de libérer la place nécessaire pour agencer des pistons 66 de boxage permettant d'obtenir une force de poussée suffisante pour surpasser largement la pression du fluide de formage contenue dans le récipient au cours de son formage. L'agencement de tels pistons 66 de boxage dans une unité 30 de moulage réalisée selon les enseignements de l'invention permet notamment d'obtenir un moule 40 muni de pistons 66 de boxage tout en conservant un encombrement, notamment transversal, réduit.

Une telle configuration permet ainsi à cette unité de moulage d'être installée sur un carrousel standard en remplacement de moule à orifice de passage centré. En l'absence de décalage de l'axe de l'orifice, un tel moule comportant des pistons de boxage devrait être installé sur un carrousel de diamètre plus grand qu'un carrousel standard.

Chaque demi-moule 44A, 44B est ici réalisé en une seule pièce.

Selon un deuxième mode de réalisation de l'invention qui est représenté aux figures 9 et 10, chaque demi-moule 44A, 44B est réalisé en deux parties distinctes formées par une coquille 68 et par un porte-coquille 70.

La coquille 68 interne est délimitée longitudinalement par une face verticale transversale avant formant la face 46 de joint du demi-moule 44A et par une face arrière, opposée à la face 46 de joint, formant une face 72 de montage. En coupe horizontale, la face 72 de montage présente une forme convexe.

Le porte-coquille 70 externe est délimité longitudinalement par une face 74 de réception avant de forme complémentaire à celle de la face 72 de montage. La coquille 68 est destinée à être logée dans le porte-coquille 70, sa face 72 de montage étant plaquée contre la face 74 de réception du porte-coquille 70. Le porte-coquille 70 est aussi délimité vers l'arrière par une face arrière opposée qui forme la face 52 d'assemblage du demi-moule 44A.

Ainsi, la coquille 68 porte la moitié de cavité 48 de moulage. Généralement, le porte-coquille 70 est équipé de moyens de refroidissement (non représentés) de la coquille 68.

Selon une première variante de réalisation du deuxième mode de réalisation qui est représentée à la figure 9, la face 72 de montage présente, en coupe horizontale, la forme d'un demi-cercle qui est centré sur l'axe "C" central de l'orifice 42 de passage. C'est par exemple le cas d'un moule 40 utilisé pour réaliser des récipients présentant un col 12 centré.

Selon cette première variante, pour que l'axe "C" central de l'orifice 42 de passage coïncide avec l'axe de coulissement de la cloche 62, la coquille 68 est agencée excentrée transversalement par rapport à la face 52 d'assemblage dans le porte-coquille 70 comme cela est représenté à la figure 9. Ainsi, la face 74 de réception du porte-coquille 70 est décalée transversalement à l'opposé de l'axe "B" de charnière par rapport au deuxième plan "P2" de symétrie de la face 52 d'assemblage du moule 40

Selon une deuxième variante de réalisation du deuxième mode de réalisation qui est représentée à la figure 10, la face 72 de montage est agencée de manière concentrique à la face 52 d'assemblage du moule 40.

L'unité 30 de moulage réalisée selon l'un quelconque des modes de réalisation précédemment décrit permet avantageusement de réaliser les récipients à col excentré tout en proposant un encombrement réduit par rapport aux unités de moulage de l'état de la technique.

Les unités de moulage réalisées selon les enseignements de l'invention permettent en outre de réaliser facilement des moules équipés de pistons de boxage sans qu'il ne soit nécessaire d'augmenter l'encombrement de l'unité de moulage.

Les unités de moulage réalisées selon les enseignements de l'invention permet de plus de réaliser facilement des récipients à col centré en remplaçant les moules ou simplement la coquille lorsque chaque demi-moule est réalisé en deux parties.

## Revendications

1. Unité (30) de moulage pour le formage de récipients en matériau thermoplastique à partir de préformes (63), notamment par soufflage ou étirage-soufflage, l'unité (30) de moulage comportant :
- deux supports (32A, 32B) de moule mobiles entre une position ouverte et une position fermée ;
- un moule (40) comportant au moins deux demi-moules (44A, 44B) dont chacun destiné à être monté sur l'un des supports (32A, 32B) de moule associé, chaque demi-moule (44A, 44B) étant délimité par une face (46) de joint avant et par une face (52) d'assemblage arrière, les deux demi-moules (44A, 44B) étant susceptibles d'occuper une position jointe par leur face (46) de joint lorsque les supports (32A, 32B) de moule occupent leur position fermée ;
- une cavité (48) de moulage qui est réalisée en deux partie dans chaque face (46) de joint et qui est reconstituée lorsque le moule (40) occupe sa position jointe, la cavité (48) débouchant verticalement vers le haut par un orifice (42) de passage destiné à laisser passer un col (12) de la préforme (63) ;
en position jointe, les faces (52) d'assemblage du moule (40) présentent :
- un premier plan (P1) vertical transversal qui s'étend le long des faces (46) de joints et qui passe par le centre (C) de l'orifice (42) de passage, et
- un deuxième plan (P2) de symétrie vertical orthogonal au premier plan (P1) de symétrie, les deux plans (P1, P2) de symétrie se croisant à un axe (O) vertical central du moule (40) ;
**caractérisé en ce que** l'axe (C) central de l'orifice (42) de passage est décalé transversalement par rapport à l'axe (O) central du moule (40).

2. Unité (30) de moulage selon la revendication précédente, **caractérisé en ce que** le premier plan (P1) passe par un axe (B) de charnière entre les deux supports de moule, l'orifice (42) de passage étant décalé dans une direction opposée à celle de l'axe (B) de charnière de manière que l'axe (O) central du moule (40) est interposé entre l'axe (C) central de l'orifice (42) de passage et l'axe (B) de charnière.

3. Unité (30) de moulage selon l'une quelconque des revendications précédentes, **caractérisée en ce qu'**en position jointe du moule (40), les faces (52) d'assemblage présentent une section horizontale elliptique.

4. Unité (30) de moulage selon l'une quelconque des revendications 1 ou 2, **caractérisée en ce qu'**en position jointe du moule, la face (52) d'assemblage de chaque demi-moule (44A, 44B) présente une section horizontale en forme d'arc de cercle qui s'étend sur un secteur inférieur à 180°.

5. Unité (30) de moulage réalisée selon l'une quelconque des revendications précédentes, **caractérisée en ce que** chaque demi-moule (44A, 44B) est réalisé en une seule pièce.

6. Unité (30) de moulage réalisée selon l'une quelconque des revendications 1 à 4, **caractérisée en ce que** chaque demi-moule (44A, 44B) est réalisé en deux parties :
- une coquille (68) interne qui est délimitée longitudinalement par une face avant formant la face (46) de joint du demi-moule (44A, 44B) et par une face arrière, opposée à la face (46) de joint, et formant une face (72) de montage de forme convexe ;
- un porte-coquille (70) externe qui est délimité longitudinalement par une face (74) de réception avant de forme complémentaire à celle de la face (72) de montage de la coquille (68) et dans laquelle la face (72) de montage de la coquille (68) est logée et par une face arrière opposée qui forme la face (52) d'assemblage du demi-moule (44A, 44B).

7. Unité (30) de moulage selon la revendication précédente, **caractérisé en ce qu'**en coupe horizontale, la face (72) de montage de la coquille présente une forme d'arc de cercle.

8. Unité (30) de moulage selon la revendication précédente, **caractérisé en ce que** chaque face (72) de montage présentant, en coupe horizontale, une forme de demi-cercle centré sur l'axe (C) central de l'orifice (42) de passage.

9. Unité (30) de moulage selon la 6 ou 7, **caractérisé en ce que** la face (72) de montage est concentrique à la face (52) d'assemblage du demi-moule (44A, 44B) associé.

10. Unité (30) de moulage selon l'une quelconque des revendications précédentes, **caractérisée** en qu'elle comporte deux pistons (66) de boxage qui sont chacun montés coulissants dans un demi-moule (44A, 44B) associé entre une position rétractée par rapport à la cavité (48) de moulage et une position étendue dans la cavité (48) de moulage, les pistons (66) de boxage étant agencés dans l'épaisseur de chaque demi-moule (44A, 44B) à proximité de l'axe (B) de charnière.

11. Installation (54) de formage **caractérisée en ce qu'**elle comporte :
- une roue (56) principale rotative ;
- une pluralité d'unités (30) de moulage réalisées selon l'une quelconque des revendications précédentes, les unités (30) de moulage étant réparties régulièrement à la périphérie de la roue (56) principale ;
- des dispositifs (58) de formage comportant un embout de raccordement avec l'orifice (42) de passage qui est centré sur l'axe (C) de l'orifice (42) de passage.

## Patentansprüche

1. Formeinheit (30) zum Formen von Behältern aus thermoplastischem Material aus Vorformlingen (63), insbesondere durch Blasen oder Streckblasen, wobei die Formeinheit (30) Folgendes aufweist:
- zwei Formträger (32A, 32B), die zwischen einer offenen Position und einer geschlossenen Position beweglich sind;
- wobei eine Form (40) mindestens zwei Halbformen (44A, 44B) aufweist, die jeweils dazu bestimmt sind, auf einem der zugehörigen Formträger (32A, 32B) angebracht zu sein, wobei jede Halbform (44A, 44B) von einer vorderen Fügefläche (46) und einer hinteren Verbindungsfläche (52) begrenzt ist, wobei die zwei Halbformen (44A, 44B) über ihre Fügefläche (46) eine zusammengefügte Position einnehmen können, wenn die Formträger (32A, 32B) ihre geschlossene Position einnehmen;
- eine Formungshöhlung (48), die in zwei Abschnitten in jeder Fügefläche (46) ausgebildet ist und die wiederhergestellt wird, wenn die Form (40) ihre zusammengefügte Position einnimmt, wobei die Höhlung (48) vertikal nach oben in eine Durchlassöffnung (42) mündet, die dazu bestimmt ist, einen Hals (12) des Vorformlings (63) hindurchzulassen;
wobei die Verbindungsflächen (52) der Form (40) in der zusammengefügten Position Folgendes aufweisen:
- eine erste vertikale Querebene (P1), die sich entlang der Fügeflächen (46) erstreckt und durch den Mittelpunkt (C) der Durchlassöffnung (42) verläuft, und
- eine zweite vertikale Symmetrieebene (P2), die orthogonal zur ersten Symmetrieebene (P1) verläuft, wobei sich die zwei Symmetrieebenen (P1, P2) an einer vertikalen Mittelachse (O) der Form (40) kreuzen; **dadurch gekennzeichnet, dass** die Mittelachse (C) der Durchlassöffnung (42) in Querrichtung bezogen auf die Mittelachse (O) der Form (40) versetzt ist.

2. Formeinheit (30) nach dem vorhergehenden Anspruch, **dadurch gekennzeichnet, dass** die erste Ebene (P1) durch eine Scharnierachse (B) zwischen den zwei Formträgern verläuft, wobei die Durchlassöffnung (42) in einer Richtung versetzt ist, die jener der Scharnierachse (B) entgegengesetzt ist, so dass die Mittelachse (O) der Form (40) zwischen der Mittelachse (C) der Durchlassöffnung (42) und der Scharnierachse (B) liegt.

3. Formeinheit (30) nach einem der vorhergehenden Ansprüche, **dadurch gekennzeichnet, dass** die Verbindungsflächen (52) in der zusammengefügten Position der Form (40) einen elliptischen horizontalen Querschnitt aufweisen.

4. Formeinheit (30) nach einem der Ansprüche 1 oder 2, **dadurch gekennzeichnet, dass** die Verbindungsfläche (52) jeder Halbform (44A, 44B) in der zusammengefügten Position der Form einen kreisbogenförmigen horizontalen Querschnitt aufweist, der sich über einen Abschnitt kleiner als 180° erstreckt.

5. Formeinheit (30) nach einem der vorhergehenden Ansprüche, **dadurch gekennzeichnet, dass** jede Halbform (44A, 44B) einstückig ausgebildet ist.

6. Formeinheit (30) nach einem der Ansprüche 1 bis 4, **dadurch gekennzeichnet, dass** jede Halbform (44A, 44B) aus zwei Abschnitten gebildet ist:
- einer Innenschale (68), die in Längsrichtung von einer vorderen Fläche, die die Fügefläche (46) der Halbform (44A, 44B) bildet, und von einer hinteren Fläche, die der Fügefläche (46) gegenüberliegt und eine konvex geformte Montagefläche (72) bildet, begrenzt wird;
- einem äußeren Schalenträger (70), der in Längsrichtung von einer vorderen Aufnahmefläche (74) mit einer Form, die zu jener der Montagefläche (72) der Schale (68) komplementär ist, und in der die Montagefläche (72) der Schale (68) aufgenommen ist, und von einer gegenüberliegenden hinteren Fläche, die die Verbindungsfläche (52) der Halbform (44A, 44B) bildet, begrenzt ist.

7. Formeinheit (30) nach dem vorhergehenden Anspruch, **dadurch gekennzeichnet, dass** die Montagefläche (72) der Schale im horizontalen Schnitt eine Kreisbogenform aufweist.

8. Formeinheit (30) nach dem vorhergehenden Anspruch, **dadurch gekennzeichnet, dass** jede Montagefläche (72) im horizontalen Schnitt eine Halbkreisform aufweist, die auf der Mittelachse (C) der Durchlassöffnung (42) zentriert ist.

9. Formeinheit (30) nach Anspruch 6 oder 7, **dadurch gekennzeichnet, dass** die Montagefläche (72) zur Verbindungsfläche (52) der zugehörigen Halbform (44A, 44B) konzentrisch ist.

10. Formeinheit (30) nach einem der vorhergehenden Ansprüche, **dadurch gekennzeichnet, dass** sie zwei Boxing-Kolben (66) aufweist, die jeweils in einer zugehörigen Halbform (44A, 44B) zwischen einer eingefahrenen Position bezogen auf die Formungshöhlung (48) und einer ausgefahrenen Position in der Formungshöhlung (48) gleitend gelagert sind, wobei die Boxing-Kolben (66) in der Dicke jeder Halbform (44A, 44B) in der Nähe der Scharnierachse (B) angeordnet sind.

11. Formungsanlage (54), **dadurch gekennzeichnet, dass** sie Folgendes aufweist:
- ein Hauptdrehrad (56);
- eine Mehrzahl von Formungseinheiten (30) nach einem der vorhergehenden Ansprüche, wobei die Formungseinheiten (30) regelmäßig am Rand des Hauptrads (56) verteilt sind;
- Formungsvorrichtungen (58) aufweisend ein Ansatzstück zur Verbindung mit der Durchlassöffnung (42), das auf der Achse (C) der Durchlassöffnung (42) zentriert ist.

## Claims

1. Moulding unit (30) for forming containers made of thermoplastic material from preforms (63), in particular by blow-moulding or stretch-blow-moulding, the moulding unit (30) having:
- two mould supports (32A, 32B) able to move between an open position and a closed position;
- a mould (40) having at least two half-moulds (44A, 44B) each one of which is intended to be mounted on one of the associated mould supports (32A, 32B), each half-mould (44A, 44B) being delimited by a front joint face (46) and by a rear assembly face (52), the two half-moulds (44A, 44B) being liable to occupy a position in which they are joined by their joint faces (46) when the mould supports (32A, 32B) occupy their closed position;
- a moulding cavity (48) that is produced in two parts in each joint face (46) and that is reconstituted when the mould (40) occupies its joined position, the cavity (48) opening vertically upwards via a passage orifice (42) intended to allow a neck (12) of the preform (63) to pass through;
in the joined position, the assembly faces (52) of the mould (40) have:
- a first transverse vertical plane (P1) that extends along the joint faces (46) and that passes through the centre (C) of the passage orifice (42), and
- a second vertical plane (P2) of symmetry orthogonal to the first plane (P1) of symmetry, the two planes (P1, P2) of symmetry intersecting at a central vertical axis (O) of the mould (40);
**characterized in that** the central axis (C) of the passage orifice (42) is offset transversely relative to the central axis (O) of the mould (40).

2. Moulding unit (30) according to the preceding claim, **characterized in that** the first plane (P1) passes through a hinge axis (B) between the two mould supports, the passage orifice (42) being offset in a direction opposite that of the hinge axis (B) so that the central axis (O) of the mould (40) is interposed between the central axis (C) of the passage orifice (42) and the hinge axis (B).

3. Moulding unit (30) according to either one of the preceding claims, **characterized in that**, when the mould (40) is in the joined position, the assembly faces (52) have an elliptical horizontal section.

4. Moulding unit (30) according to either one of Claims 1 and 2, **characterized in that**, when the mould is in the joined position, the assembly face (52) of each half-mould (44A, 44B) has a horizontal section in the shape of an arc of a circle that extends over a sector smaller than 180°.

5. Moulding unit (30) produced according to any one of the preceding claims, **characterized in that** each half-mould (44A, 44B) is produced in one piece.

6. Moulding unit (30) produced according to any one of Claims 1 to 4, **characterized in that** each half-mould (44A, 44B) is produced in two parts:
- an internal shell (68) that is delimited longitudinally by a front face forming the joint face (46) of the half-mould (44A, 44B), and by a rear face, opposite the joint face (46), forming a mounting face (72) with convex shape;
- an external shell carrier (70) that is delimited longitudinally by a front receiving face (74) with a shape complementary to that of the mounting face (72) of the shell (68) and in which the mounting face (72) of the shell (68) is housed, and by an opposite rear face that forms the assembly face (52) of the half-mould (44A, 44B) .

7. Moulding unit (30) according to the preceding claim, **characterized in that**, in horizontal cross section, the mounting face (72) of the shell has the shape of an arc of a circle.

8. Moulding unit (30) according to the preceding claim, **characterized in that** each mounting face (72) has, in horizontal cross section, the shape of a semicircle centred on the central axis (C) of the passage orifice (42) .

9. Moulding unit (30) according to Claim 6 or 7, **characterized in that** the mounting face (72) is concentric with the assembly face (52) of the associated half-mould (44A, 44B).

10. Moulding unit (30) according to any one of the preceding claims, **characterized in that** it has two punching pistons (66) that are each mounted so as to slide in an associated half-mould (44A, 44B) between a position in which they are retracted relative to the moulding cavity (48) and a position in which they are extended in the moulding cavity (48), the punching pistons (66) being arranged in the thickness of each half-mould (44A, 44B) in the vicinity of the hinge axis (B) .

11. Forming installation (54), **characterized in that** it has:
- a rotary main wheel (56);
- a plurality of moulding units (30) produced according to any one of the preceding claims, the moulding units (30) being regularly distributed at the periphery of the main wheel (56);
- forming devices (58) having an end piece for connection with the passage orifice (42) that is centred on the axis (C) of the passage orifice (42).
